# EUROPÄISCHE PATENTSCHRIFT

(11) **EP 3 022 094 B1**
(45) Veröffentlichungstag und Bekanntmachung des Hinweises auf die Patenterteilung: **30.08.2017**
(21) Anmeldenummer: 14739203.9
(22) Anmeldetag: 17.07.2014
(51) Int. Cl.: B60R 21/2338

(54) **AIRBAG**
AIRBAG
COUSSIN GONFLABLE DE SÉCURITÉ

(30) Priorität: 19.07.2013 DE 102013012017
(43) Veröffentlichungstag der Anmeldung: 25.05.2016
(73) Patentinhaber: Autoliv Development AB, 447 83 Vårgårda (SE)
(72) Erfinder: JAHME, Bernhard, 86391 Stadtbergen (DE); KOCJAN, Magdalena, PL-54-129 Wroclaw (PL); BURAK, Piotr, PL-54-129 Wroclaw (PL)
(74) Vertreter: Stornebel, Kai
(86) Internationale Anmeldenummer: PCT/EP2014/065371
(87) Internationale Veröffentlichungsnummer: WO 2015/007838

(56) Entgegenhaltungen:
- DE-A1- 4 240 227
- DE-A1- 10 223 189
- DE-U1- 20 213 651
- DE-U1-202004 006 655
- "AIR BAG ATTACHMENT APPARATUS", RESEARCH DISCLOSURE, MASON PUBLICATIONS, HAMPSHIRE, GB, Bd. 401, 1. September 1997 (1997-09-01), Seite 581/582, XP000726772, ISSN: 0374-4353

## Beschreibung

Die Erfindung betrifft einen Airbag mit einer Vorderseite und einer damit verbundenen Rückseite aus einem Airbagmaterial, das ein Volumen einschließt, das bei einer Aktivierung eines Gasgenerators oder eine Druckgasquelle mit Entfaltungsgas befüllt wird und mit zumindest einem Fangband, das an der Vorderseite an einer ersten Befestigungsstelle und an der Rückseite an einer zweiten Befestigungsstelle verbunden ist.

Fangbänder in einem Airbag dienen dazu, die Form und damit auch das Volumen des Airbags einzugrenzen, um zu verhindern, dass während oder nach der Befüllung eine nicht erwünschte Gestalt eingenommen wird.

Die DE 42 40 227 B4 betrifft eine Gurtanordnung zur Verwendung bei einem aufblasbaren Airbag sowie ein Verfahren zur Herstellung eines solchen Airbags. Die Fangbandanordnung weist mehrere Fangbänder auf, die an einem Vorderteil und einem Rückteil des Airbags angebracht sind und diese zusammenhalten. Die Gurtanordnung kann einen zentralen Befestigungsbereich auf-weisen, von dem zwei oder mehr Fangbänder abgehen. Der zentrale Befestigungsbereich kann eine Ringgestalt aufweisen, die als Verstärkungs- und Befestigungsstück dient.

Problematisch bei dieser Art und Weise der Befestigung ist die Tatsache, dass die Befestigungsnähte im Bereich der Anbindung an das Airbagmaterial reißen können, wenn der Airbag mit Entfaltungsgas befüllt wird.

Die DE 02 23 189 A1 betrifft einen gattungsgemäßen Gassack für ein Fahrzeuginsassen-Rückhaltesystem mit einer oberen Mantellage, die dem Fahrzeuginsassen bei aufgeblasenem Gassack zugewandt ist und einer der oberen Mantellage gegenüberliegenden unteren Mantellage. Die beiden Mantellagen sind an ihren Umfangsrändern miteinander verbunden. Zwischen den beiden Mantellagen ist eine zusätzliche Verbindung zur Begrenzung der Dicke des aufgeblasenen Gassacks vorgesehen. Die zusätzliche Verbindung umfasst wenigstens eine erste, mit dem Gassackmantel verbundene Gewebelage, die über eine Abströmöffnung des Gassackes angeordnet ist. In einer Ausführungsform ist an der oberen Mantellage ein erstes Fangband und an der unteren Mantellage ein zweites Fangband angeordnet, die über eine umlaufende Naht im mittleren Bereich miteinander verbunden sind. In den Gewebelagen sind partielle Einschnitte im Gewebe vorgesehen, um die Gewebelagen zu einem gewissen Grad luftdurchlässig zu machen.

Aus "Air Bag Attachment Apparatus", Research Disclosure, Mason Publications, Hampshire, GB, Bd. 401, 1. September 1997, Seite 581/582, XP000725772, ISSN: 0374-4353 ist ein Airbag mit den Merkmalen des Oberbegriffes bekannt.
Aufgabe der vorliegenden Erfindung ist es, einen Airbag bereitzustellen, der eine größere Haltbarkeit der Befestigung von Fangbändem an der Airbagwand ermöglicht.

Erfindungsgemäß wird diese Aufgabe durch einen Airbag mit den Merkmalen des Hauptanspruches gelöst, vorteilhafte Ausgestaltungen und Weiterbildungen der Erfindung sind in den Unteransprüchen, der Beschreibung und den Figuren offenbart.

Der erfindungsgemäße Airbag mit einer Vorderseite und einer damit verbundenen Rückseite aus einem Airbagmaterial, das ein Volumen einschließt, das bei einer Aktivierung des Gasgenerators oder einer Druckgasquelle mit Entfaltungsgas befüllt wird und mit zumindest einem Fangband, das an der Vorderseite an einer ersten Befestigungsstelle und an der Rückseite an einer zweiten Befestigungsstelle verbunden ist, wobei zumindest eine Befestigungsstelle eine Befestigungsnaht mit einander gegenüberliegenden Abschnitten zur Befestigung des Fangbandes an dem Airbagmaterial aufweist und zwischen den Ab- schnitten der Befestigungsnaht zumindest ein Entlastungsschlitz an der Befestigungsstelle eingebracht ist, sieht vor, dass die Orientierung des zumindest einen Entlastungsschlitzes senkrecht zu der Zugrichtung des Fangbandes orientiert ist. Durch das Vorsehen zumindest eines Entlastungsschlitzes ist es möglich, der Verbindung zwischen dem Fangband und dem Airbagmaterial eine größere Elastizität zu verleihen, so dass die Belastung auf das Gewebe und die Befestigungsnaht verringert wird. Dies führt dazu, dass eine gegenüber dem Stand der Technik elastischere Verbindung bereitgestellt wird, wobei durch den Entlastungsschlitz ein Großteil des Fangbandes weiterhin das Airbagmaterial auf der Innenseite abdeckt, so dass gleichzeitig eine Hitzeschutzfunktion ausgeübt wird. Die Orientierung der Entlastungsschlitze oder des Entlastungsschlitzes verläuft senkrecht zu der Zugrichtung des Fangbandes, um eine Aufweitung des Schlitzes oder der Schlitze zu ermöglichen, damit eine ausreichende Nachgiebigkeit zur Aufnahme von Belastungsspitzen erzielt werden kann.

Die Befestigungsnaht kann umlaufend ausgebildet und gegebenenfalls auch als Doppelnaht ausgeführt sein, wobei der zumindest eine Entlastungsschlitz von der Befestigungsnaht umgeben ist. Dadurch wird sichergestellt, dass in dem von der Befestigungsnaht umgebenden Bereich eine ausreichende Nachgiebigkeit und Elastizität in dem Fangband bereitgestellt wird, um zu verhindern, dass die Befestigungsnaht an einem Abschnitt reißt.

Insbesondere bei einer umlaufenden Anordnung der Befestigungsnaht ist es vorteilhaft, wenn mehrere Entlastungsschlitze vorhanden sind, die der Kontur der Befestigungsnaht folgen. Grundsätzlich ist es auch bei einer gradlinigen Befestigungsnaht möglich und vorgesehen, dass mehrere Entlastungsschlitze hintereinander oder nebeneinander angeordnet sind, um eine vergrößerte Elastizität in dem festgelegten Fangbandabschnitt bzw. an der Befestigungsstelle bereitzustellen.

Die Befestigungsstelle kann an einer Befestigungslage ausgebildet sein, an der zumindest ein Fangband ausgebildet oder befestigt ist. Während Fangbänder in der Regel eine flache, langgestreckte Gestalt aufweisen, kann die Befestigungsstelle eine besondere, davon abweichende Ausgestaltung aufweisen, beispielsweise eine Vergrößerung der Fangbandbreite darstellen, so dass sich an einem Bereich des Fangbandes, beispielsweise am Endbereich, eine vergrößerte Fläche ausbildet. Diese vergrößerte Fläche bildet dann die Befestigungslage aus, die an dem Airbagmaterial festgelegt wird. Durch eine vergrößerte Fläche der Befestigungslage ist es möglich, die durch das Fangband eingeleiteten Kräfte großflächig zu verteilen, um Belastungsspitzen zu reduzieren. Neben einer integralen Ausgestaltung der Befestigungsstelle an dem Fangband ist es möglich, dass die Befestigungsstelle als separate Komponente ausgebildet ist, an der ein Fangband befestigt ist oder mehrere Fangbänder befestigt sind. Die Befestigungslage kann somit großflächig an dem Airbagmaterial festgelegt sein und spezielle Befestigungsabschnitte für ein oder mehrere Fangbänder aufweisen. Die Befestigungslage kann aus einem besonderen Material ausgebildet sein, das beispielsweise eine gegenüber dem Fangband oder dem Airbagmaterial erhöhte Festigkeit und/oder Hitzebeständigkeit aufweist, um das Airbagmaterial vor einer zu hohen thermischen Belastung zu schützen.

Der Entlastungsschlitz kann in der Befestigungslage angeordnet sein, wenn das Fangband über die Befestigungslage an der Vorderseite oder der Rückseite des Airbags festgelegt wird. Dadurch ist es möglich, Belastungsspitzen bei der Entfaltung abzubauen, indem die Entlastungsschlitze verformt und ein Teil der Kräfte in die Verformung der Befestigungslage geleitet wird.

Die Befestigungsstelle kann auch zwischen des Befestigungslage und dem Fangband und einer der Airbaglagen und der Befestigungslage ausgebildet sein. Die einander gegenüberliegenden Abschnitte der Befestigungsnaht können zwischen der Befestigungsnaht an dem Airbagmaterial und der Befestigungsnaht an dem Fangband ausgebildet sein. Es ist auch möglich und vorge- sehen, dass die Entlastungsschlitze in dem Fangband angeordnet sind.

Die Kontur der Befestigungsnaht kann rund oder polygonal ausgebildet sein, wobei es besonders vorteilhaft ist, wenn bei einer polygonalen Ausgestaltung die Fangbänder im Bereich der gradlinigen Abschnitte der polygonalen Befestigungsnaht befestigt sind, um eine großflächige Einleitung von Kräften über die gesamte Breite der Fangbänder realisieren zu können. Dadurch ist gewährleistet, dass ein großer Bereich der Befestigungsnaht mit den zugeordneten Entlastungsschlitzen oder dem zugeordneten Entlastungsschlitz eine elastische Verformung ermöglicht, wodurch eine erhöhte Sicherheit gegen ein Versagen der Befestigungsnaht gegeben ist.

Der Entlastungsschlitz oder die Entlastungsschlitze können in das Gewebe des Fangbandes oder des Befestigungselementes eingeschnitten sein, ebenso ist es möglich, dass die Entlastungsschlitze ausgeschnitten sind, also dass nicht nur das Material des Fangbandes oder des Befestigungselementes durchtrennt, sondern teilweise entfernt wurde. Durch die Ausgestaltung des Entlastungsschlitzes als Ausschnitt kann eine vergrößerte Elastizität auch in einer Orientierung senkrecht zur Längserstreckung des Schlitzes erreicht werden.

Nachfolgend werden Ausführungsbeispiele der Erfindung anhand der beigefügten näher erläutert. Es zeigen:
Fig. 1 eine Querschnittsansicht durch eine erste Ausführungsform;
Fig. 2 eine erste Befestigungsvariante in Draufsicht;
Fig. 3 eine Variante der Figur 2;
Fig. 4a und 4b Darstellungen eines Befestigungselementes vor und nach dem Entfalten;
Fig. 5 Detaildarstellung eines Befestigungselementes;
Fig. 6 - 9 Varianten der Figur 5; sowie
Fig. 10 eine Variante der Fig. 1.

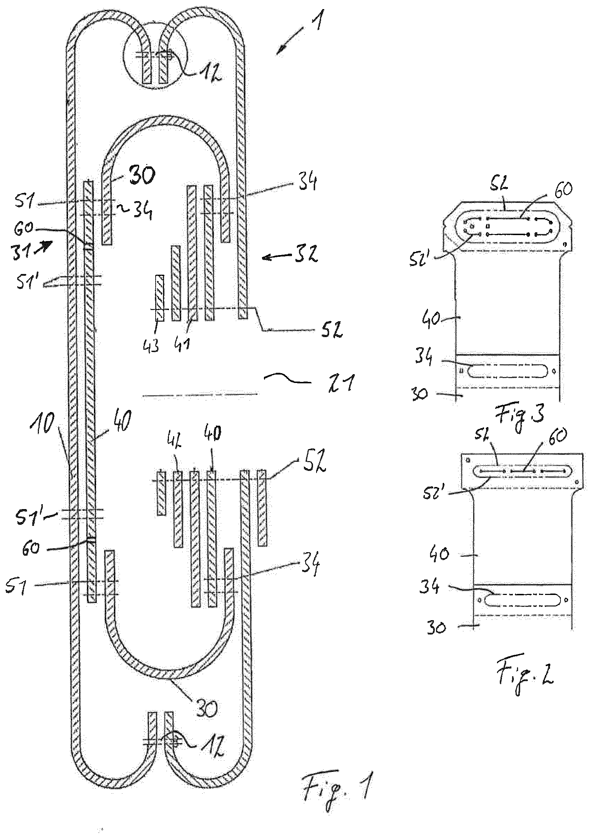

Figur 1 zeigt in einer Schnittdarstellung einen Airbag 1 mit einer Vorderseite 10 und einer Rückseite 20, die miteinander durch eine umlaufende Verbindungsnaht 12 verbunden sind. Die Vorderseite 10 und die Rückseite 20 bestehen aus separaten Materialzuschnitten. Über die als Umfangsnaht ausgebildete Verbindungsnaht 12 wird ein Hohlkörper ausgebildet, der durch einen nicht dargestellten Gasgenerator durch eine Einfüllöffnung 21 mit Entfaltungsgas befüllt wird. Die Einfüllöffnung 21 ist an der Rückseite 20 angeordnet, es besteht auch die Möglichkeit, dass der Gasgenerator durch die Öffnung in den Airbag 1 hineingeschoben und der Airbag 1 an dem Gasgenerator festgelegt wird. Alternativ zu einer mehrteiligen Ausgestaltung des Airbags 1 kann dieser auch einteilig ausgebildet sein, der Airbag ist dann als OPW-Airbag (one-piece woven) ausgebildet. Als Vorderseite 10 wird diejenige Seite angesehen, die im Entfaltungsfall dem Fahrzeuginsassen zugewandt ist.

Innerhalb des durch den Airbag 1 eingeschlossenen Volumens sind im dargestellten Ausführungsbeispiel zwei Fangbänder 30 angeordnet, die während und nach dem Befüllen des Airbagvolumens verhindern, dass der Airbag 1 sein maximales Volumen einnimmt. Die Fangbänder 30 begrenzen die Verlagerung der Vorderseite 10 von der Rückseite 20 weg und legen somit die Form und damit auch das Volumen des Airbags 1 fest.

Auf der Vorderseite 10 ist das Fangband 30 an einer ersten Befestigungsstelle 31 über eine erste Befestigungsnaht 51 mit einander gegenüberliegenden Abschnitten, bei einer runden Ausgestaltung der Befestigungsstelle 31 mit einer umlaufenden ersten Befestigungsnaht 51, an einer ersten Befestigungslage 40 befestigt. Die erste Befestigungsnaht 51 ist als Nähnaht ausgefüllt, grundsätzlich besteht auch die Möglichkeit, andere Nahtformen wie Klebenaht oder Schweißnaht zu wählen. Die erste Befestigungslage 40 ist wiederum über eine zweite Befestigungsnaht 51 ' an der Vorderseite 10 des Airbags 1 angenäht, wobei die zweite Befestigungsnaht 51 ' innerhalb der einander gegenüberliegenden Abschnitte der ersten Befestigungsnaht 51 angeordnet ist. Beide Befestigungsnähte 51, 51 ' sind als Doppelnähte ausgeführt. Zwischen den Befestigungsnähten 51, 51 ' sind in der Befestigungslage 40 Entlastungsschlitze 60 eingebracht, die bei einer umlaufenden Ausgestaltung der Befestigungsnähte 51, 51 ' entweder ebenfalls umlaufend oder nur abschnittsweise in die Befestigungslage 40 eingebracht sind. Die Entlastungsschlitze 60 können auch zwischen den Nähten der Doppelnaht 34 angeordnet sein.

Auf der Rückseite 20 des Airbags 1 ist das Fangband 30 an einer zweiten Befestigungsstelle 32 über eine Befestigungslage 40 festgelegt. Dazu ist das Fangband 30 über eine Doppelnaht 34 zunächst an der zweiten Befestigungslage 40, die als separates Bauteil ausgebildet ist, über eine Verbindungsnaht 34 befestigt. Die Befestigungslage 40 selbst ist an der Rückseite 20 über die Befestigungsnaht 52 angenäht. Auch hier können Nahtformen, die von einer Nähnaht abweichen, eingesetzt werden. Die Entlastungsschlitze 60 können in der zweiten Befestigungslage zwischen der Doppelnaht 34 und der Befestigungsnaht 52 oder zwischen der Doppelnaht 34 angeordnet sein.

Weiter innen sind auf der Befestigungslage 40 Verstärkungslagen 41, 42, 43 angeordnet, die auf der Rückseite 20 über die Befestigungsnaht 52 an der Befestigungslage 40 und der Rückseite 20 angenäht sind.

Figur 2 zeigt eine erste Ausgestaltungsform der Erfindung gemäß Figur 1 in Draufsicht, bei der die zweite Befestigungsstelle 32 gezeigt ist. Das Fangband 30 wird über eine langlochförmige Verbindungsnaht 34 an einer T-förmigen Befestigungslage 40 angenäht. Die Befestigungslage 40 ist über die korrespondierend ausgebildete Befestigungsnaht 52 mit den einander gegenüberliegenden Abschnitten 52, 52' an dem nicht dargestellten Airbagmaterial der Rückseite 20 festgelegt. Zwischen den beiden gradlinig verlaufenden Befestigungsnahtabschnitten 52, 52' sind drei Entlastungsschlitze 60 in einer Linie angeordnet. Die Orientierung der Entlastungsschlitze 60 erfolgt in ihrer Längserstreckung senkrecht zur Längserstreckung des Fangbandes 30 und damit auch senkrecht zur Hauptrichtung der durch das Fangband 30 aufgebrachten Kräfte auf die Befestigungslage 40. Die Enden der Entlastungsschlitze 60 sind mit lochartigen Abschlussöffnungen versehen, die ausgeschnitten, ausgestanzt oder auch ausgelasert sein können. Dadurch wird ein Einreißen oder Weiterreißen in Längserstreckung der Entlastungsschlitze 60 verhindert.

Eine Variante der Erfindung ist in der Figur 3 dargestellt, bei der ein grundsätzlich der Figur 2 entsprechender Aufbau dargestellt ist. Lediglich die Befestigungsnaht 52 weist eine größere Breite auf, so dass die einander parallel gegenüberliegenden Nahtabschnitte 52, 52' einen größeren Zwischenraum einschließen. Die innerhalb der Kontur der Befestigungsnaht 52 angeordneten Entlastungsschlitze 60 folgen der langlochartigen Kontur der Befestigungsnaht 52 und ermöglichen dadurch bei der Aufbringung von Zugkräften über das Fangband eine Verformung in dem Gewebe innerhalb der Kontur der Befestigungsnaht 52, wodurch Belastungsspitzen nicht unmittelbar auf die Befestigungsnahtabschnitte 52, 52' übertragen werden, sondern durch die Verformung der Befestigungslage 40 eine Abmilderung erfahren.

Bei beiden Ausführungsformen gemäß Figur 2 und 3 ist die Orientierung der Entlastungsschlitze 60 im Wesentlichen senkrecht zu der Richtung der Krafteinleitung. Innerhalb der Kontur der Befestigungsnaht 52, 52' ist das Gewebe der Befestigungslage 40 oder, bei Ausbildung der Befestigungslage als Fangband oder einer unmittelbaren Befestigung des Fangbandes an dem Airbagmaterial noch Material vorhanden, das eine Schutzwirkung für das Airbagmaterial darstellt. Insbesondere im Bereich der Befestigung des Fangbandes ist das Airbagmaterial besonders belastet, da neben den überall wirkenden Kräften durch das Entfaltungsgas die Rückhaltekräfte durch das Fangband 30 zusätzlich auf das Material einwirken. Das in der Regel heiße Entfaltungsgas schwächt zusätzlich die Festigkeit des Airbaggewebes, was durch die erfindungsgemäße Ausgestaltung wirksam verhindert oder vermindert wird.

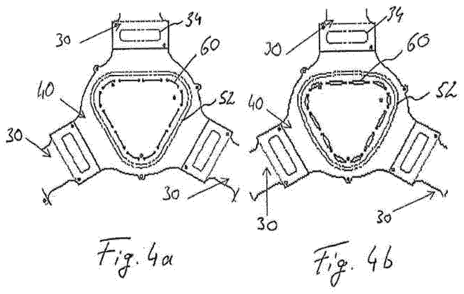

In den Figuren 4a und 4b sind unterschiedliche Darstellungen vor und nach dem Entfalten des Airbags dargestellt. Die Befestigungslage 40 ist als separates Bauteil ausgebildet, an dem drei Fangbänder 30 über Verbindungsnähte 34 befestigt sind. Die Fangbänder 30 sind sternförmig orientiert und gleichwinklig zueinander beabstandet. Die Befestigungslage 40 ist über eine als Doppelnaht ausgeführte Befestigungsnaht 52 an dem nicht dargestellten Airbag befestigt, wobei die Kontur der Befestigungsnaht 52 die eines abgerundeten Dreiecks darstellt. Die Seitenflächen der Kontur verlaufen im Wesentlichen senkrecht zu der Längsorientierung der Fangbänder 30. Innerhalb der Kontur der geschlossen ausgebildeten Befestigungsnaht 52 sind eine Vielzahl Entlastungsschlitze 60 in das Gewebe der Befestigungsnaht 40 eingebracht. Innerhalb der Kontur der Spur der Entlastungsschlitze 60 befindet sich das Material der Befestigungslage 40, in der Regel ein Gewebe.

In der Figur 4a, in der der Airbag nicht mit Entfaltungsgas befüllt ist, liegen die einander gegenüberliegenden Kanten der Entlastungsschlitze 60 aneinander an. Eine Figur 4b, in der der entfaltete und mit Entfaltungsgas befüllte Zustand des Airbags gezeigt ist, ist zu erkennen, dass die Entlastungsschlitze 60 aufgeweitet sind, was durch die Zugkräfte, die durch die Fangbänder 30 ausgeübt werden, begründet ist. Aufgrund der senkrecht zu der Zugkraftrichtung orientierten Entlastungsschlitze 60 sind diese in ihrer Breite aufgeweitet, so dass sich eine ovale Form der Entlastungsschlitze 60 ausbildet. Durch die Entlastungsschlitze 60 ergibt sich eine Verformbarkeit und Elastizität der Befestigungslage 40, wodurch die Belastung auf die Befestigungsnaht 52 verringert wird. Dadurch ist es möglich, dass Belastungsspitzen abgebaut und insgesamt die Haltbarkeit des Airbags 1 verbessert wird.

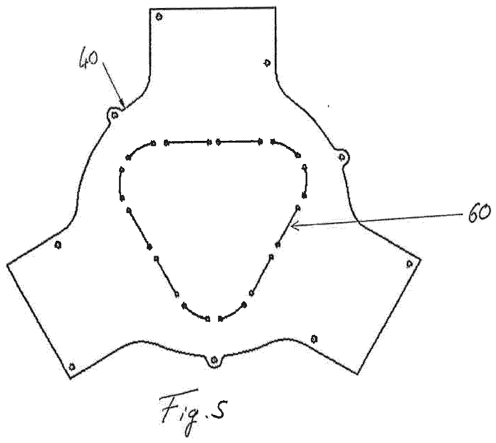

Figur 5 zeigt eine Detailansicht der Befestigungslage 40 gemäß der Figur 4a in einem noch nicht befestigten Zustand. Die Anschlussbereiche für die Fangbänder 30 erstrecken sich strahlförmig von den Längsseiten der im Wesentlichen dreieckig angeordneten Entlastungsschlitze 60 weg. Innerhalb der Kontur der Entlastungsschlitze 60 ist das Material der Befestigungslage 40 weiterhin vorhanden und dient als Hitzeschild, wie zur Figur 2 ausgeführt. Die Enden der Entlastungsschlitze 60 sind mit kreisförmigen Abschlussöffnungen versehen, um ein Ausreißen oder Weiterreißen zu verhindern.

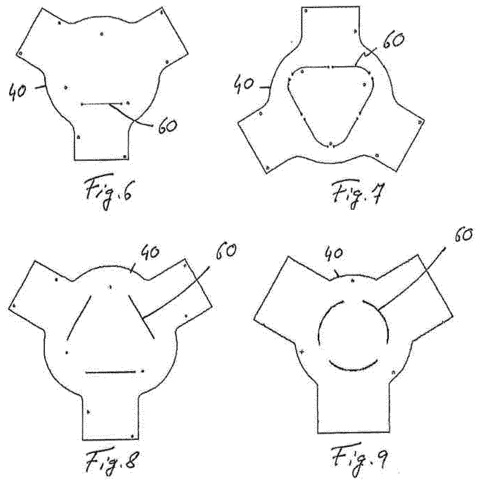

In der Figur 6 ist eine Variante der Erfindung gezeigt, bei der die Befestigungslage 40 nur einen Entlastungsschlitz 60 aufweist, eine solche Ausgestaltung ist insbesondere dann vorgesehen, wenn nur geringe Kräfte zu erwarten sind oder aber nur an dem dem Entlastungsschlitz 60 zugeordneten Befestigungsabschnitt der Befestigungslage 40 ein Fangband 30 befestigt wird.

Eine weitere Ausgestaltung der Erfindung ist in der Figur 7 gezeigt, bei der statt einer Vielzahl kleiner, kurzer Entlastungsschlitze pro Seitenkante der Kontur der Entlastungsschlitzspur nur zwei Entlastungsschlitze 60 vorgesehen sind. Über die Länge der Schlitze lassen sich die maximalen Verformungswerte einstellen und eine Anpassung an die zu erwartenden Belastungen erreichen.

In der Figur 8 ist eine Variante der Figur 6 dargestellt, bei der drei Entlastungsschlitze 60 den jeweiligen Befestigungsabschnitten der Befestigungslage 40 gegenüberliegend angeordnet sind. Durch die Ausgestaltung nur eines Entlastungsschlitzes 60 in gradliniger Ausgestaltung ist eine große Verformung der Befestigungslage 40 möglich.

In der Figur 9 ist eine Variante der Figur 8 dargestellt, bei der statt gradliniger Entlastungsschlitze 60 gekrümmte Entlastungsschlitze 60 vorgesehen sind, die gegenüber den jeweiligen Befestigungsabschnitten der Befestigungslage 40 für die Fangbänder angeordnet sind. Insgesamt ergibt die Kontur der Entlastungsschlitze 60 gemäß Figur 9 eine Kreisform, so dass auch eine kreisförmige Befestigungsnaht vorgesehen sein kann.

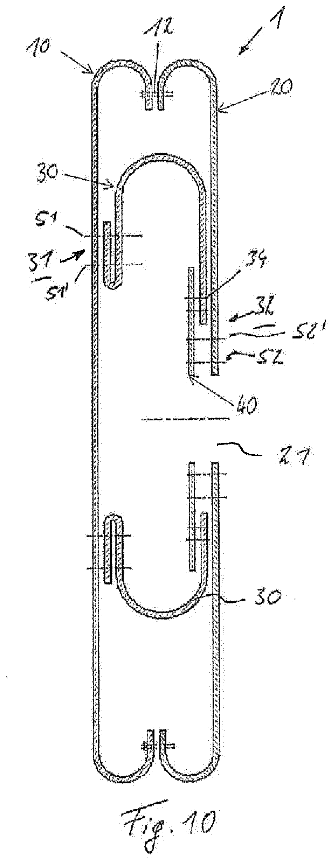

Figur 10 zeigt eine Variante der Erfindung, die im Wesentlichen der Ausführungsform gemäß der Figur 1 entspricht. Gleiche Bezugszeichen bezeichnen gleiche Bauteile. Statt einer Befestigung des Fangbandes 30 an der Vorderseite 10 über eine vordere Befestigungslage 40 ist das Fangband 30 auf der Vorderseite 10 an einer ersten Befestigungsstelle 31 über eine Befestigungsnaht 51, 51 ' mit einander gegenüberliegenden Abschnitten direkt befestigt. Die Befestigungsnaht 51 , 51 ' ist als Nähnaht ausgefüllt, grundsätzlich besteht auch die Möglichkeit, andere Nahtformen wie Klebenaht oder Schweißnaht zu wählen. Das vordere Ende des Fangbandes 30 ist umgeschlagen, so dass eine Materialaufdoppelung vorhanden ist. Die Befestigung kann entweder oder Entlastungsschlitze oder mit Entlastungsschlitzen erfolgen, wobei die Entlastungsschlitze zwischen den beiden Befestigungsnähte 51, 51 ' in dem Fangband 30 ausgebildet sein kann. Aufgrund der Materialaufdoppelung ist eine ausreichende Stabilität des Fangbandes 30 und der Befestigungsstelle 31 gewährleistet.

Auf der Rückseite 20 des Airbags 1 ist das Fangband 30 an einer zweiten Befestigungsstelle 32 über eine Befestigungslage 40 festgelegt. Dazu ist das Fangband 30 über eine Doppelnaht 34 zunächst an einer Befestigungslage 40, die als separates Bauteil ausgebildet ist, über eine Verbindungsnaht 34 befestigt. Die Befestigungslage 40 selbst ist an der Rückseite 20 über die Befestigungsnähte 52, 52' angenäht. Auch hier können Nahtformen, die von einer Nähnaht abweichen, eingesetzt werden. Die Entlastungsschlitze 60 können zwischen der Doppelnaht 34 und den Befestigungsnähten 52, 52' angeordnet sein, um eine ausreichende Elastizität bei der Entfaltung des Airbags bereitzustellen und die Belastung auf die Befestigungsnähte 52, 52' zu verringern.

## Patentansprüche

1. Airbag mit einer Vorderseite (10) und einer damit verbundenen Rückseite (20) aus einem Airbagmaterial, das ein Volumen einschließt, das bei einer Aktivierung eines Gasgenerators oder einer Druckgasquelle mit Entfaltungsgas befüllt wird, und mit zumindest einem Fangband (30), das an der Vorderseite (10) des Airbags (1) an einer ersten Befestigungsstelle (31) und an der Rückseite (20) des Airbags (1) an einer zweiten Befestigungsstelle (32) verbunden ist, wobei zumindest eine Befestigungsstelle (31, 32) eine Befestigungsnaht (51, 51', 52, 52') mit einander gegenüberliegenden Abschnitten zur Befestigung des Fangbandes (30) an dem Airbagmaterial aufweist und zwischen den Abschnitten der Befestigungsnaht (51, 51', 52, 52') zumindest ein Entlastungsschlitz (60) an der Befestigungsstelle (31, 32) eingebracht ist, **dadurch gekennzeichnet, dass** die Orientierung des zumindest einen Entlastungsschlitzes (60) senkrecht zu der Zugrichtung des Fangbandes (30) orientiert ist.

2. Airbag nach Anspruch 1, **dadurch gekennzeichnet, dass** die Befestigungsnaht (51, 51', 52, 52') umlaufend ausgebildet und der zumindest eine Entlastungsschlitz (60) von der Befestigungsnaht (51, 51', 52, 52') umgeben ist.

3. Airbag nach Anspruch 1 oder 2, **dadurch gekennzeichnet, dass** mehrere Entlastungsschlitze (60) vorgesehen sind, die der Kontur der Befestigungsnaht (51, 51', 52, 52') folgen.

4. Airbag nach einem der voranstehenden Ansprüche, **dadurch gekennzeichnet, dass** die Befestigungsstelle (31, 32) an einer Befestigungslage (40) ausgebildet ist, an der zumindest ein Fangband (30) ausgebildet oder befestigt ist.

5. Airbag nach Anspruch 4, **dadurch gekennzeichnet, dass** mehrere Fangbänder (30) an der Befestigungslage (40) angenäht sind.

6. Airbag nach Anspruch 4 oder 5, **dadurch gekennzeichnet, dass** der Entlastungsschlitz (60) in der Befestigungslage (40) angeordnet ist.

7. Airbag nach einem der voranstehenden Ansprüche, **dadurch gekennzeichnet, dass** die Kontur der Befestigungsnaht (51, 51', 52, 52') rund oder polygonal ausgebildet ist.

8. Airbag nach einem der voranstehenden Ansprüche, **dadurch gekennzeichnet, dass** die Entlastungsschlitze (60) eingeschnitten oder ausgeschnitten sind.

## Claims

1. Airbag with a front side (10) and a rear side (20) connected thereto made from an airbag material, which encloses a volume that is filled with unfolding gas upon activation of a gas generator or a pressure gas source, and with at least one retaining strap (30), which is connected on the front side (10) of the airbag (1) at a first attachment point (31) and on the rear side (20) of the airbag (1) at a second attachment point (32), wherein at least one attachment point (31, 32) has an attachment seam (51, 51', 52, 52') with opposing sections to attach the retaining strap (30) to the airbag material and at least one relief slit (60) is introduced between the sections of the attachment seam (51, 51', 52, 52') at the attachment point (31, 32), **characterised by** that the orientation of the at least one relief slit (60) is oriented perpendicular to the tensile direction of the retaining strap (30).

2. Airbag according to claim 1, **characterised by** that the attachment seam (51, 51', 52, 52') is formed circumferentially and the at least one relief slit (60) is enclosed by the attachment seam (51, 51', 52, 52').

3. Airbag according to claim 1 or 2, **characterised by** that several relief slits (60) are provided, which follow the contour of the attachment seam (51, 51', 52, 52').

4. Airbag according to one of the preceding claims, **characterised by** that the attachment point (31, 32) is formed at an attachment layer (40) at which the at least one retaining strap (30) is formed or attached.

5. Airbag according to claim 4, **characterised by** that several retaining straps (30) are sewn on at the attachment layer (40).

6. Airbag according to claim 4 or 5, **characterised by** that the relief slit (60) is arranged in the attachment layer (40).

7. Airbag according to one of the preceding claims, **characterised by** that the contour of the attachment seam (51, 51', 52, 52') is formed to be round or polygonal.

8. Airbag according to one of the preceding claims, **characterised by** that the relief slits (60) are cut in or cut out.

## Revendications

1. Coussin gonflable de sécurité présentant un côté avant (10) et un côté arrière (20) relié à ce dernier, lesquels sont réalisés dans une matière spécifique aux coussins gonflables de sécurité, délimitant un volume qui se trouve rempli d'un gaz de déploiement lors de l'activation d'un générateur de gaz ou d'une source de gaz sous pression, et présentant au moins une bande d'attache (30) reliée au côté avant (10) du coussin gonflable de sécurité (1) en un premier point de fixation (31) et au côté arrière (20) du coussin gonflable de sécurité (1) en un deuxième point de fixation (32), au moins un point de fixation (31, 32) présentant une couture de fixation (51, 51', 52, 52') avec des sections en vis-à-vis pour solidariser la bande d'attache (30) à la matière spécifique aux coussins gonflables de sécurité, au moins une fente d'allègement (60) étant disposée au niveau du point de fixation (31, 32) entre les sections de la couture de fixation (51, 51', 52, 52'), **caractérisé en ce que** l'orientation de l'au moins une fente d'allègement (60) est perpendiculaire au sens de traction de la bande d'attache (30).

2. Coussin gonflable de sécurité selon la revendication 1, **caractérisé en ce que** la couture de fixation (51, 51', 52, 52') est circonférentielle et l'au moins une fente d'allègement (60) est entourée par la couture de fixation (51, 51', 52, 52').

3. Coussin gonflable de sécurité selon la revendication 1 ou 2, **caractérisé en ce qu'**il est prévu plusieurs fentes d'allègement (60) qui suivent le contour de la couture de fixation (51, 51', 52, 52').

4. Coussin gonflable de sécurité selon l'une des revendications précédentes, **caractérisé en ce que** le point de fixation (31, 32) est réalisé sur un emplacement de fixation (40) sur lequel est constituée ou fixée au moins une bande d'attache (30).

5. Coussin gonflable de sécurité selon la revendication 4, **caractérisé en ce que** plusieurs bandes d'attache (30) sont cousues sur l'emplacement de fixation (40).

6. Coussin gonflable de sécurité selon la revendication 4 ou 5, **caractérisé en ce que** la fente d'allègement (60) est située sur l'emplacement de fixation (40).

7. Coussin gonflable de sécurité selon l'une des revendications précédentes, **caractérisé en ce que** le contour de la couture de fixation (51, 51', 52, 52') est de forme circulaire ou polygonale.

8. Coussin gonflable de sécurité selon l'une des revendications précédentes, **caractérisé en ce que** les fentes d'allègement (60) sont formées par entaillage ou par découpage.
